# EUROPÄISCHE PATENTANMELDUNG

(11) **EP 1 656 995 A1**
(43) Veröffentlichungstag der Anmeldung: **17.05.2006**
(21) Anmeldenummer: 04405699.2
(22) Anmeldetag: 12.11.2004
(51) Int. Cl.: B03B 9/06

(54) **Verfahren zur Verwertung von Schreddermüll**

(71) Anmelder: X. Wiederkehr AG, 5622 Waltenschwil (CH); Daicos AG, 6315 Oberägeri (CH)
(72) Erfinder: Wiederkehr, Peter, 5610 Wohlen (CH); Gutknecht, Hans-Rudolf, 6340 Baar (CH)
(74) Vertreter: Roshardt, Werner Alfred

(57) **Zusammenfassung**

Bei einem Verfahren zur Verwertung von Schreddermüll, insbesondere einer Schredder-Leichtfraktion aus der Automobilzerkleinerung, werden zunächst eine Feinfraktion (5) und eine Mittelfraktion (6) aus dem Schreddermüll (1) gewonnen. Aus der Mittelfraktion (6) werden dann Eisenmetalle (15) und Nichteisenmetalle (17) abgeschieden, so dass eine vorgereinigte Mittelfraktion gewonnen wird. Die Feinfraktion und/oder die vorgereinigte Mittelfraktion werden sodann insbesondere mittels eines Extruders (18, 19) thermomechanisch aufgeschlossen. Aus der aufgeschlossenen Mittelfraktion werden dann Eisenmetalle (28) und Nichteisenmetalle (31), inerte Materialien sowie Kunststoffe (32) abgeschieden, zur Gewinnung eines faserigen Restmaterials (34). Das Restmaterial (34) besteht im Wesentlichen aus weitgehend von Schadstoffen befreiten faserigen Stoffen, welche ohne weitere Trennschritte zu einem (insbesondere festen) Ersatzbrennstoff (44) verarbeitet werden können. Dies wird besonders durch das thermo-mechanische Aufschliessen der Mittelfraktion (6) ermöglicht. Daraus geht nämlich ein Zwischenprodukt hervor, aus welchem mit üblichen Prozessschritten auf effiziente Weise verbliebene Wertstoffe, im letztlich zu erzeugenden Brennstoff störende inerte Materialien, als auch Schadstoffe abgeschieden werden können.

## Beschreibung

### Technisches Gebiet

Die Erfindung betrifft ein Verfahren zur Verwertung von Schreddermüll, insbesondere einer Schredder-Leichtfraktion aus der Automobilzerkleinerung. Sie betrifft ferner eine Anlage zur Durchführung des Verfahrens sowie einen Brennstoff hergestellt aus Schreddermüll, insbesondere aus einer Schredder-Leichtfraktion aus der Automobilzerkleinerung.

### Stand der Technik

Es ist seit einiger Zeit bekannt, Altautos, elektrische und elektronische Geräte in sogenannten Schredder-Anlagen zu zerkleinern. Derartigen Anlagen können z. B. ganze Automobilkarosserien mitsamt Motor, Getriebe, Achsen, Reifen, Elektronik und Innenausstattung zugeführt werden. Nach der Zerkleinerung werden Wertstoffe (insbesondere Eisenmetalle sowie Nichteisenmetalle) ausgesondert. Dies im Gegensatz zu früheren Verwertungsverfahren für Altautos, bei welchen die Autowracks zerschnitten, zu Schrottpaketen gepresst und mitsamt umweltschädigenden Substanzen im Stahlwerk eingeschmolzen wurden. Das am Ende des Schredderprozesses verbleibende Material, z. B. Polsterreste, organische Kleinteile, Dämmstoffe etc., wird als Schredder-Leichtfraktion oder Resh bezeichnet. Der Resh weist Faseranteile auf, in welchen sich Metallanteile, insbesondere auch Schwermetalle, festgesetzt haben. Aus diesem Grund ist er nach Gesetz üblicherweise als Sondermüll klassiert, welcher unter Beachtung strenger gesetzlicher Vorschriften und mit entsprechend hohen Kosten entsorgt werden muss.

Im Rahmen von herkömmlichen Resh-Verwertungsverfahren, wie sie z. B. aus der DE-AS 24 36 549 (Ingenieurgesellschaft Denzinger KG) oder der US 4,034,861 (Stemicarbon B. V.) bekannt sind, wurde versucht, den Anteil der ausgesonderten Wertstoffe zu steigern, sowie möglichst reine Wertstoffe zu erhalten. So konnte der Verkaufspreis der aufbereiteten Wertstoffe erhöht und die Menge der verbleibenden Leichtfraktion verringert werden.

Trotzdem verursachte die verbleibende Leichtfraktion noch immer hohe Kosten, wenn sie aufgrund der gesetzlichen Vorschriften beispielsweise als Sondermüll deponiert oder in Spezialöfen verbrannt werden musste.

Es wurden deshalb verschiedene Verfahren zur Weiterverarbeitung der Schredder-Leichtfraktion, insbesondere aus der Automobilverwertung, entwickelt, um aus einem Teil des Materials ein brennfähiges Material bzw. einen Ersatzbrennstoff herzustellen.

Die DE 197 55 629 A1 (UWH) betrifft ein Verfahren mit folgenden Schritten: Vorabsieben der Leichtfraktion zur Gewinnung eines Feingutstroms und eines Grobgutstroms, Trennung des Feingutstroms in Metallpartikel und Schreddersand, Zerkleinern des Grobgutstroms und Trennen in zwei Fraktionen durch eine Nachsiebstufe, Zugeben der feineren Fraktion des Grobgutstroms zum Feingutstrom des ersten Schritts, Auftrennen der gröberen Fraktion des Grobgutstroms in eine Schwer- und eine Leichtfraktion, Mahlen der Leichtfraktion und Trennung in Flugstoffe und Metalle, Zerkleinern der Schwerfraktion und Auftrennen in ein Kunststoffgranulat und eine Metallfraktion. Das Kunststoffgranulat kann als Reduktionsmittel in einem Hochofen oder als Energieträger in der Zementindustrie eingesetzt werden. Die Flugstoffe können als Konditionierungsmittel für Klärschlamm verwendet werden und bewirken unter anderem eine Heizwerterhöhung, so dass das Klärschlamm/Flugstoff-Gemisch als Ersatzbrennstoff verwendet werden kann.

### Die DE 42 05 309 A1 (Preussag) offenbart ein Verfahren mit im Wesentlichen vier Stufen:

Trennung der Reststoffe in drei Fraktionen (Fein-, Mittel-, Grobfraktion), mechanisches Aufbereiten (Zerkleinerung und Sortieren) der Grobfraktion zur Gewinnung eines FE-Metallkonzentrats, eines NE-Metallkonzentrats und verschiedener Brennstoffkonzentrate bzw. thermisch entsorgbarer Stoffe, Abtrennen eines Gewöllanteils und eines Grobgutanteils aus der Mittelfraktion und anschliessend durch mehrere Sortierstufen ebenfalls Gewinnung eines FE-Metallkonzentrats, eines NE-Metallkonzentrats und verschiedener Brennstoffkonzentrate bzw. thermisch entsorgbarer Stoffe aus dem Restgut; und durch mehrere Sortierstufen Gewinnung eines FE-Metallkonzentrats, eines NE-Metallkonzentrats und verschiedener Brennstoffkonzentrate bzw. thermisch entsorgbarer Stoffe auch aus der Feinfraktion.

Die EP 0 518 776 A1 (Valerco) betrifft Ersatzbrennstoffe, insbesondere für den Einsatz in Zementwerken, und Verfahren zu deren Herstellung aus nichtmetallischen Stoffen aus der Automobilverwertung. Im Rahmen des Verfahrens werden lediglich Zerkleinerungs- und Verteilungsschritte durchgeführt: Zunächst werden die nichtmetallischen Stoffe gesiebt, um ein Gemisch mit einer Siebgrösse von 20-300 mm zu erhalten. Danach erfolgt eine Vorverkleinerung, wobei der Grossteil der magnetischen Metalle entfernt wird. Daraufhin werden eine schwere und eine leichte Fraktion gebildet. Aus der leichten Fraktion werden staubartige Stoffe entfernt, um einen ersten Ersatzbrennstoff z. B. für die Zementindustrie zu gewinnen. Die schwere Fraktion wird von Nichteisenmetallen befreit, anschliessend weiter zerkleinert und fallweise auch noch von verbliebenen magnetischen Stoffen befreit, so dass ein zweiter Ersatzbrennstoff gebildet wird. Der zweite Ersatzbrennstoff kann schliesslich noch zu einem Granulat mit Korngrössen von unter 5 mm weiterverarbeitet werden.

Bei den beschriebenen Verfahren wird ein Brennstoff erzeugt, welcher so zusammengesetzt ist, dass er nur für spezielle Anwendungen (Hochöfen, Zementwerke) einsetzbar ist.

Die DE 44 26 503 A1 (Noell-KRC) betrifft ein Verfahren zur Aufbereitung von Schredder-Leichtmüll in stofflich und thermisch verwertbare sowie deponierbare Fraktionen. Zunächst erfolgt eine Siebung zur Gewinnung einer Fein-, einer Mittel- und einer Grobfraktion, diese werden in der Folge ohne weitere Zerkleinerung aufbereitet. Bei der Mittelfraktion erfolgt eine Abscheidung von FE-Metallen und eine Sichtung (Brennstofffraktion und Deponiegut), die Feinfraktion wird ebenfalls einer Sichtung unterworfen, wobei das enthaltene Leichtgut in die Brennstofffraktion geht, und aus der Grobfraktion wird zunächst eine FE-Fraktion gewonnen und der Rest einer zweiten Siebung unterworfen, wobei deren Grobanteil einer NE-Abscheidung zugeführt wird zur Gewinnung eines NE-Konzentrats und einer Brennstofffraktion. Die Deponiefraktion wird einer Wäsche unterzogen, so dass eluierbare Stoffe beseitigt werden. Die Brennstofffraktion kann schliesslich konditioniert werden, beispielsweise brikettiert.

Die US 5,443,157 (Nimco Shredding) betrifft ein Verfahren zum Sortieren und Aufbereiten von festen Abfallstoffen, insbesondere von Auto-Schreddermüll. Dabei werden verschiedene Eisen- und Nichteisenmetalle sowie Polyurethan-Schaum, Kunststoffe und Gummi wiedergewonnen. Das Verfahren umfasst vier wesentliche Stufen: Trennung des Auto-Schreddermülls in drei Fraktionen; Verarbeitung von nichtmagnetischem Feinmaterial; Wiedergewinnung von Kunststoffen und Gummi; Wiedergewinnung und Reinigung von Polyurethan-Schaum. Die mittlere Fraktion aus der ersten Stufe wird zunächst in eine leichte und eine schwere Fraktion separiert, wonach Fasermaterial aus der feinen Fraktion ausgeschieden wird. Das so erhaltene faserfreie Material, welches im Wesentlichen aus leichten Kunststoffen und Polyurethanschaum besteht, kann z. B. verbrannt werden, um Energie zu gewinnen. In der Stufe 2 wird das Feinmaterial ebenfalls in eine leichte und eine schwere Fraktion separiert, wonach die schwere Fraktion von Drähten befreit wird. Dem verbleibenden Teil der Fraktion kann Phosphorsäure oder Trinatriumphosphat zugegeben werden, um Schwermetalle wie Blei oder Cadmium zu stabilisieren. Danach wird das Material gereinigt und kann schliesslich als Zuschlagstoff für Beton, Portlandzement oder Asphalt verwendet werden.

Beim Verfahren gemäss der US 2001/48039 A1 (J. L. Simon, J. R. Clark) werden zunächst feste Abfallstoffe, z. B. aus der Automobilverwertung, unter Zugabe eines oberflächenaktiven Stoffs geschreddert und danach durch mehrere Trennstufen in verschiedene Fraktionen aufgeteilt: Zunächst erfolgt eine Aufteilung in eine schwere und eine leichte Fraktion; die schwere Fraktion wird dann von FE-Metallen befreit, welche einer Wiederverwertung zugeführt werden; aus dem Rest der schweren Fraktion werden nun NE-Metalle und nichtmetallische Stoffe separiert; aus der leichten Fraktion werden zunächst die FE-Metalle ausgesondert; der Rest der leichten Fraktion wird dann nach der Grösse der Bestandteile in zwei Fraktionen aufgeteilt; die feinere Fraktion, welche wegen der Anwendung des oberflächenaktiven Stoffs beim Schreddern inert ist, kann als Deckmaterial für Deponien verwendet werden. Die gröbere Fraktion ist als Brennstoff oder als Brennstoffzusatz geeignet; falls gewünscht kann sie weiter zerkleinert, gereinigt und/oder pelletiert werden.

Die DE 196 21 921 C1 (Sekundärrohstoff-Verwertungszentrum Schwarze Pumpe) offenbart ein Verfahren zur Dekontamination von Abfall, z. B. von Schredderrückständen, durch Zerstörung bzw. Immobilisierung von Schadstoffen, und zur Verwertung der organischen Bestandteile zur Gaserzeugung durch eine Festbettdruckvergasung. Das Verfahren umfasst folgende Schritte: Der Müll wird zunächst getrennt oder zusammen mit bekannten Zuschlag- oder Brennstoffen getrocknet. Anschliessend wird das Material verpresst, dann auf 800 °C aufgeheizt und einer Trommlung unterworfen. Das erzeugte Müllkompaktat kann in der Festbettdruckvergasung zu Rohgas, flüssigen Kohlenwasserstoffen und Schlacke umgesetzt werden. Als Zuschlagstoff kann vor der Verpressung Steinkohle zugegeben werden, so dass eine hohe Thermostandfestigkeit und ein vorgegebener minimaler Kohlenstoffgehalt erzielt wird. Auch später, vor der Zuführung in den Festbettdruckvergaser, können weitere Brenn- oder Zuschlagstoffe beigegeben werden. Die im Müll enthaltenen Schwermetalle setzen sich bevorzugt in der in der Festbettdruckvergasung erzeugten Schlacke ab; diese kann schliesslich im Bauwesen verwendet werden.

Diese Verfahren erlauben zwar teilweise die Herstellung eines für verschiedene Zwecke einsetzbaren Ersatzbrennstoffs. Allerdings wird jeweils nur ein gewisser Teil der Leichtfraktion zu Ersatzbrennstoff verarbeitet, und es fallen neben den Wertstoffen weitere mit Schadstoffen, z. B. Schwermetallen, belastete Materialfraktionen an, welche gesondert entsorgt werden müssen. Die Verfahren sind ausserdem zum Teil sehr aufwändig und deshalb kostenintensiv.

### Darstellung der Erfindung

Aufgabe der Erfindung ist es, ein dem eingangs genannten technischen Gebiet zugehörendes Verfahren zur Verwertung von Schreddermüll und eine zur Durchführung des Verfahrens geeignete Anlage zu schaffen, welche die effiziente Verwertung eines grossen Teils der Schredder-Leichtfraktion zu einem vielseitig einsetzbaren Ersatzbrennstoff erlauben.

Die Lösung der Aufgabe ist durch die Merkmale des Anspruchs 1 definiert. Gemäss der Erfindung werden im Rahmen des Verfahrens folgende Schritte durchgeführt:
- Gewinnung einer Feinfraktion und einer Mittelfraktion aus dem Schreddermüll;
- Abscheiden von Eisen- und Nichteisenmetallen aus der Mittelfraktion zur Gewinnung einer vorgereinigten Mittelfraktion;
- Thermo-mechanisches Aufschliessen der vorgereinigten Mittelfraktion und bevorzugt auch der Feinfraktion, insbesondere mittels eines Extruders;
- Abscheiden von Eisen- und Nichteisenmetallen, inerten Materialien sowie Kunststoffen aus der aufgeschlossenen Mittelfraktion und der Feinfraktion zur Gewinnung eines faserigen Restmaterials, welches ohne weitere Trennschritte zu einem Ersatzbrennstoff verarbeitbar ist.

Der Schreddermüll, d. h. insbesondere die Schredder-Leichtfraktion aus der Entstaubungsanlage des Schredders, wird also zunächst in eine erste Fraktion (Feinfraktion) mit einer geringeren Korngrösse und in eine zweite Fraktion (Mittelfraktion) mit einer höheren Korngrösse aufgeteilt. Diese Aufteilung erfolgt mittels einer Siebvorrichtung, insbesondere mittels eines Sternfingersiebs. Die Mittelfraktion wird vorgereinigt, indem Eisen- (FE) und Nichteisenmetalle (NE) abgeschieden werden. Zu diesem Zweck werden eine Magnetvorrichtung, insbesondere ein Bandmagnet, und ein an sich bekannter NE-Scheider eingesetzt. Als Nächstes wird die vorgereinigte Mittelfraktion und bevorzugt auch die Feinfraktion thermo-mechanisch aufgeschlossen, d. h. die verschiedenen Materialien in den Fraktionen werden durch Druck und Reibung aneinander aufgerieben, so dass am Material, besonders an Faserstoffen, anhaftende Metallteile und Stäube gelöst und freigelegt werden. Gleichzeitig erfolgt eine Homogenisierung des Materials, welche im Hinblick auf nachfolgende Verfahrensschritte vorteilhaft ist. Das thermo-mechanische Aufschliessen erfolgt insbesondere mittels eines geeigneten Extruders. Die Wahl, ob nur die Mittelfraktion oder sowohl die Fein- als auch die Mittelfraktion thermo-mechanisch aufgeschlossen werden, erfolgt abhängig vom Ausgangsmaterial und den übrigen Verfahrensschritten. Aus der aufgeschlossenen Mittelfraktion und der Feinfraktion werden nun Eisen- und Nichteisenmetalle, inerte Materialien (z. B. Glas, Sand etc.) sowie Kunststoffe abgeschieden. Dazu werden Trennsysteme eingesetzt, insbesondere Trenntische, Magnetvorrichtungen und NE-Scheider.

Das verbleibende Restmaterial besteht im Wesentlichen aus weitgehend von Schadstoffen befreiten faserigen Stoffen, welche ohne weitere Trennschritte zu einem (insbesondere festen) Ersatzbrennstoff verarbeitet werden können. Dies wird besonders durch das thermo-mechanische Aufschliessen der Mittelfraktion ermöglicht. Daraus geht nämlich ein Zwischenprodukt hervor, aus welchem mit üblichen Prozessschritten auf effiziente Weise verbliebene Wertstoffe, im letztlich zu erzeugenden Brennstoff störende inerte Materialien, als auch Schadstoffe abgeschieden werden können.

Mit Vorteil erfolgt im selben Verfahren die Weiterverarbeitung des faserigen Restmaterials zum Ersatzbrennstoff. Das faserige Restmaterial weist eine geringe Dichte auf, benötigt also grosse Transportvolumen. Es ist deshalb von Vorteil, dass die Weiterverarbeitung und Veredelung zum (viel dichteren) Brennstoff direkt an die genannten Verfahrensschritte anschliesst. Der hergestellte Ersatzbrennstoff wird extern zur thermischen Energiegewinnung eingesetzt und hat ein breites Anwendungsgebiet (direkte Erzeugung von Wärme, Herstellung von Gas, Stromerzeugung etc.) Mit dem dargestellten Verfahren wird somit die Schredder-Leichtfraktion möglichst vollständig zu wirtschaftlich verwertbaren Wertstoffen (insbesondere Metallen) und zu einem ebenfalls wirtschaftlich verwertbaren, hochwertigen Ersatzbrennstoff verarbeitet. Es fällt also mehr verkaufsfähiges Material an und gleichzeitig weniger kostenpflichtig zu entsorgender (z. B. zu deponierender) Restmüll. Beides erhöht die Wirtschaftlichkeit der Resh-Verwertung.

Alternativ kann der Brennstoff unabhängig von den genannten Verfahrensschritten erzeugt, und direkt das faserige Restmaterial z. B. als Ausgangsstoff für die Brennstoffproduktion verkauft werden.

Mit Vorteil wird der Schreddermüll vor der Gewinnung der Feinfraktion und der Mittelfraktion von lose aufliegendem Eisenmetall befreit, z. B. mittels eines Bandmagneten. Dadurch kann bereits ein gewisser Anteil der Eisenmetalle auf einfache Weise ausgesondert werden. In dieser Verfahrensstufe kann zusätzlich eine Abtrennung von PUR-SchaumMaterial vorgesehen werden.

Bevorzugt werden zur Gewinnung der Fein- und Mittelfraktion folgende Schritte ausgeführt:
- Trennung des Schreddermülls in eine Grobfraktion, die Mittelfraktion und die Feinfraktion;
- Rückführen der Grobfraktion in eine Zerkleinerungsvorrichtung, insbesondere in eine Schredderanlage.

Das Schreddern liefert ein Materialgemisch mit inhomogener Korngrösse. Die Grobfraktion, d. h. derjenige Anteil des Schreddermülls, welcher eine gewisse Korngrösse übersteigt, kann in einem nächsten Zerkleinerungsschritt, z. B. im nächsten Schredderdurchgang, weiter zerkleinert werden, wonach ein grosser Anteil dieses Materials als Teil der Mittel- oder gar Feinfraktion anfallen wird. Das beschriebene Vorgehen bietet den Vorteil, dass im Schreddermüll verbliebene grosse Teile die weitere Verarbeitung der Mittelfraktion (z. B. den thermo-mechanischen Aufschluss) nicht stören können, in einem nächsten Schritt aber in der Mittel- oder Feinfraktion verarbeitet werden können.

Mit Vorteil werden die drei Fraktionen so gewonnen, dass eine Korngrösse der Feinfraktion kleiner ist als ca. 15 mm und dass eine Korngrösse der Grobfraktion grösser ist als ca. 60 mm, d. h. die Mittelfraktion weist entsprechend den verbleibenden Anteil mit Korngrössen zwischen 15 und 60 mm auf. Die Korngrössen der Fraktionen werden durch eine entsprechende Wahl, Dimensionierung und Einstellung der Siebvorrichtung bestimmt. Es hat sich gezeigt, dass die genannten Korngrössen eine effiziente und selektive Weiterverarbeitung der Fein- und Mittelfraktion erlauben. Was die Mittelfraktion betrifft, führt deren thermo-mechanische Transformation im Extruder zu einer weiteren Zerkleinerung und einer Homogenisierung, so dass die aufgeschlossene Mittelfraktion noch etwa einen Korngrössenbereich von 10 bis 40 mm aufweist.

Alternativ können andere Korngrössen gewählt werden, insbesondere abhängig von den im weiteren Verfahrensverlauf durchzuführenden Verarbeitungsschritten.

Bevorzugt wird aus der Feinfraktion eine Feinstfraktion ausgeschieden. Dadurch können Schwermetalle, z. B. Zink oder Zinn, welche nach dem Schredderprozess in der Form von Metallstäuben vorliegen, in einer frühen Verfahrensstufe ausgeschieden werden. Als maximale Korngrösse der Feinstfraktion wird beispielsweise 3 mm gewählt. Aus der Feinstfraktion können in der Folge mittels einer Magnetvorrichtung Eisenmetalle zur Wiederverwertung abgetrennt werden.

Mit Vorteil erfolgt das Abscheiden von Eisen- und Nichteisenmetallen, inerten Materialien sowie Kunststoffen separat für die aufgeschlossene Mittelfraktion und die Feinfraktion. Erst anschliessend werden die verbleibenden Anteile der Fraktionen zusammengeführt, um gemeinsam das faserige Restmaterial zu bilden, welches zur Weiterverarbeitung zu einem Ersatzbrennstoff geeignet ist. Die separate Verarbeitung der Fraktionen erlaubt selektive Verfahrensschritte, welche für das jeweils verarbeitete Zwischenprodukt, d. h. für dessen Zusammensetzung, Korngrösse, Dichte etc., optimiert sind.

Alternativ können die aufgeschlossene Mittelfraktion und die Feinfraktion zusammengeführt und gemeinsam weiter verarbeitet werden.

Zur getrennten Verarbeitung der Feinfraktion und der aufgeschlossenen Mittelfraktion werden bevorzugt folgende Schritte durchgeführt:
- Klassieren der aufgeschlossenen Mittelfraktion in eine erste Staubfraktion, eine erste Leichtfraktion und eine erste Schwerfraktion;
- Auftrennung der ersten Schwerfraktion in Eisenmetalle, Nichteisenmetalle und Inert- und Kunststoffmaterialien;
- Klassieren der Feinfraktion in eine zweite Staubfraktion, eine zweite Leichtfraktion und eine zweite Schwerfraktion;
- Auftrennung der zweiten Schwerfraktion in Eisenmetalle, Nichteisenmetalle und Inert- und Kunststoffmaterialien;
- Zusammenführen der ersten Leichtfraktion und der zweiten Leichtfraktion;
- Abtrennen von Nichteisen-Metallen aus den zusammengeführten Leichtfraktionen;
- Zusammenführen der ersten und der zweiten Staubfraktion mit den Leichtfraktionen zur Gewinnung des faserigen Restmaterials.

Es hat sich gezeigt, dass die genannte Abfolge der Schritte eine effiziente Abtrennung der Eisenmetalle, Nichteisenmetalle, Inert- und Kunststoffmaterialien aus der Feinfraktion und der aufgeschlossenen Mittelfraktion ermöglicht. Übrig bleibt in den Staub- und den Leichtfraktionen das zur Weiterverarbeitung zu Ersatzbrennstoff geeignete faserige Restmaterial mit einer geringen Schadstoffbelastung. Das Klassieren der aufgeschlossenen Mittelfraktion und der Feinfraktion in die jeweiligen Staub-, Leicht- und Schwerfraktionen erfolgt bevorzugt mit einer Mehrzahl von Trennsystemen, die Abscheidung der FE-Metalle mit Magnettrommeln und die Abscheidung von NE-Metallen aus den Schwerfraktionen und den Leichtfraktionen mit NE-Scheidern. Die abgeschiedenen NE-Metalle können in weiteren Schritten z. B. mittels Starkfeldmagnetabscheidern in die verschiedenen enthaltenen Metalle (z. B. Kupfer, Aluminium) aufgetrennt werden.

Alternativ kann die Abfolge und Art der Schritte variiert werden. So kann das Zusammenführen verschiedener aus der Fein- und der aufgeschlossenen Mittelfraktion hervorgehender Fraktionen bereits in früheren Verfahrensstadien stattfinden. Ausserdem können zusätzliche Trennschritte vorgesehen werden oder die Reihenfolge der Schritte kann verändert werden.

Vorzugsweise wird dem faserigen Restmaterial bei der Weiterverarbeitung zum Ersatzbrennstoff ein mineralischer Stabilisator zum Binden von Schwermetallen zugegeben. Überraschenderweise hat sich gezeigt, dass durch diese Massnahme die noch im faserigen Restmaterial vorhandenen geringen Mengen an Schwermetallen derart gebunden werden können, dass einerseits die üblichen gesetzlichen Grenzwerte für gesondert zu entsorgendes Abfallmaterial unterschritten werden und andererseits ein gefahrlos verbrennbares Material hergestellt wird, dies heisst insbesondere, dass bei der Verbrennung allenfalls noch vorhandene Schwermetalle nicht mit dem Rauch ausgestossen werden, sondern in der Asche verbleiben.

Für ein optimales Abbinden der Schwermetalle liegt das Gewichtsverhältnis des zugegebenen mineralischen Stabilisators zum faserigen Restmaterial mit Vorteil zwischen 1:10 und 1:100, bevorzugt zwischen 1:15 und 1:50. Versuche haben ergeben, dass mit einem derartigen Anteil des Stabilisators ein praktisch vollständiges Abbinden stattfinden kann.

Vorzugsweise umfasst der mineralische Stabilisator mindestens ein Pyromorphit, insbesondere Fluoropyromorphit, Hydroxypyromorphit und/oder Chloropyromorphit. Pyromorphite sind Pb₅(PO₄)₃X-Kristalle wie Pb₅(PO₄)₃F (Fluoropyromorphit), Pb₁₀(PO₄)₆(OH)₂ (Hydroxypyromorphit) und Pb₅(PO₄)₃Cl (Chloropyromorphit) mit geochemischen Eigenschaften, welche eine weitgehende wasserunlösliche Abbindung der in der Schredder-Leichtfraktion auftretenden Schwermetalle ermöglichen.

Mit Vorteil umfasst der mineralische Stabilisator zusätzlich zum Pyromorphit bzw. den Pyromorphiten noch mindestens einen der folgenden Stoffe:
- Hinsdalit - (Pb,Sr)Al₃[(OH,H₂O)₆|(PO₄,SO₄)],
- Plumbogummit - PbAI₃(PO₄ₕ(OH)ₛ·H₂O,
- Corkit - PbFe₃³⁺(PO₄)(SO₄)(OH)₆.

Durch Beifügen dieser Stoffe können bestimmte im Schreddermüll vorhandene Schwermetalle selektiv abgebunden werden. Die genaue Rezeptur des mineralischen Stabilisators kann den zu erwartenden Schwermetallen und deren Mengenanteilen angepasst werden.

Bevorzugt werden dem faserigen Restmaterial bei der Weiterverarbeitung zu Ersatzbrennstoff Zuschlagstoffe zur Optimierung des Heizwerts zugegeben. Dies erlaubt die Herstellung eines vielseitig verwendbaren Brennstoffs. Durch die Wahl des Zuschlagsstoffs und dessen Dosierung lässt sich der Heizwert auf einen für eine bestimmte Anwendung des Ersatzbrennstoffs gewünschten Wert einstellen. Im Rahmen des dargestellten Verfahrens ist somit die wahlweise Herstellung eines Ersatzbrennstoffs mit einem Heizwert zwischen 20 bis zu 32 MJ/kg möglich.

Mit Vorteil umfassen die Zuschlagstoffe mindestens einen der folgenden Stoffe:
- Polyethylen-Folienmaterial,
- Polyethylen-Granulat,
- Calciumadditive,
- nachwachsende Rohstoffe.

Im Rahmen des Verfahrens kann so Abfall in Form von Polyethylen-Folienmaterial nutzbringend verwertet werden. Die PE-Folien werden als Ballen angeliefert, zerkleinert und dem faserigen Restmaterial zugegeben. Das PE-Folienmaterial weist typischerweise einen Heizwert von mindestens 30 MJ auf. Polyethylen-Granulat mit einem typischen Heizwert von über 40 MJ kann subsidiär bei nicht genügender Folienmaterialmenge oder zum Erreichen eines hohen Heizwerts eingesetzt werden. Durch die geregelte Zugabe von Polyethylen kann insbesondere der Heizwert so eingestellt werden, dass bei der späteren Verwendung des Ersatzbrennstoffs eine optimale Verbrennung gewährleistet ist. Es ist somit problemlos möglich, mit einer einzigen Anlage mehrere unterschiedliche Ersatzbrennstoffe mit unterschiedlichen Heizwerten herzustellen. Die Calciumadditive verbessern die Entflammbarkeit und das Brennverhalten des Materials und tragen zu verbesserten Abgaswerten bei. Nachwachsende Rohstoffe wie Holz, Stroh, Rinde oder andere Biomasse sind ebenfalls zur Anreicherung des faserigen Restmaterials geeignet. Weil ihre Verbrennung CO₂-neutral ist, weist der erzeugte Ersatzbrennstoff gesamthaft eine bessere CO₂-Bilanz auf. Er ist somit umweltverträglicher und wird gegebenenfalls steuerlich bevorzugt behandelt.

Die Zugabe des mineralischen Stabilisators und/oder der Zuschlagstoffe zur Optimierung des Heizwerts zum faserigen Restmaterial erfolgt in einem Mischer. In diesem wird das Restmaterial mit dem Stabilisator bzw. mit einer Mehrzahl von Stabilisatorstoffen bzw. das Restmaterial mit den Zuschlagstoffen innig miteinander vermischt. Im Fall des Stabilisators wird eine maximale Abbindewirkung erzeugt, wenn eine möglichst grosse Oberfläche des Restmaterials mit den Stabilisatorstoffen kontaktiert wird. Die Zuschlagstoffe sollen möglichst gleichmässig im entstehenden Mischmaterial verteilt sein, damit der letztlich produzierte Ersatzbrennstoff von homogener Qualität ist und ein gutes und gleichmässiges Brennverhalten zeigt. Die Mischung des Restmaterials mit dem Stabilisator kann vor, gleichzeitig oder nach der Mischung mit den Zuschlagstoffen erfolgen. Mit der Mischung verbunden ist bevorzugt auch eine Entstaubung.

Vorzugsweise wird das faserige Restmaterial bei der Weiterverarbeitung zu Ersatzbrennstoff einer thermo-mechanischen Transformation unterworfen. Diese erfolgt insbesondere in einem geeigneten Extruder. Dadurch wird einerseits ein homogenes Brennstoffmaterial erzeugt, andererseits können durch Wahl des Extruders, dessen Betriebsparameter und der Extruderpressköpfe die Dichte des Brennstoffs sowie die Form und Dimension des Brennstoffs (Granulate, Chips, Pellets, Kompaktate) bestimmt werden.

Zur Herstellung des Ersatzbrennstoffs wird mit Vorteil das faserige Restmaterial nach der thermo-mechanischen Transformation in einer Kühlvorrichtung abgekühlt. Anschliessend kann das Material in einer Zerkleinerungsvorrichtung zu Pulver oder Granulat der gewünschten Grösse weiter zerkleinert werden, wenn dies vom Kunden so gewünscht ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendete Zeichnung zeigt ein Blockdiagramm eines erfindungsgemässen Verfahrens.

### Wege zur Ausführung der Erfindung

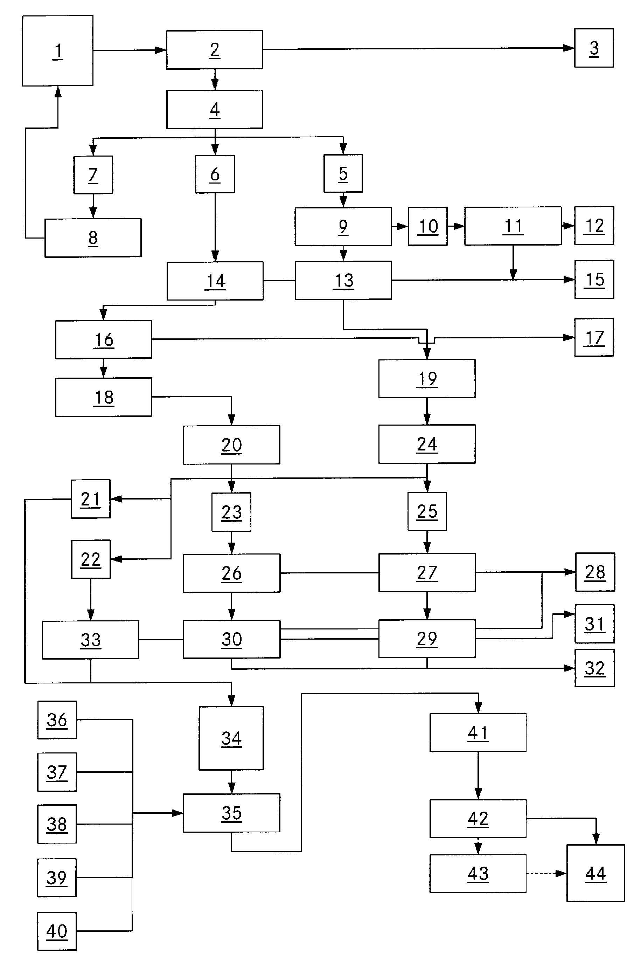

Die Figur zeigt ein Blockdiagramm eines erfindungsgemässen Verfahrens zur Verwertung von Schreddermüll, welches insbesondere für die Verwertung einer Schredder-Leichtfraktion (Resh) aus der Automobilzerkleinerung geeignet ist. Das Blockdiagramm zeigt die Materialflüsse und die im Laufe des Verfahrens durchgeführten Verfahrensschritte. Im Diagramm sind Verfahrensschritte durch rechteckige Blöcke, Ausgangs-, Zwischen und Endprodukte durch quadratische Blöcke symbolisiert.

Aus dem Resh 1 wird zunächst mittels eines Bandmagneten 2 aufliegendes Eisenmetall 3 abgeschieden und in einen Sammelbehälter transportiert. Der verbleibende Teil des Resh gelangt über eine entsprechende Dosier- und Beschickungsstation zu einem Sternfingersieb 4, wo er in drei Fraktionen, eine Feinfraktion 5 mit Korngrössen bis zu 15 mm, eine Mittelfraktion 6 mit Korngrössen von 15-60 mm und eine Grobfraktion 7 mit Korngrössen von mehr als 60 mm aufgeteilt wird. Die Grobfraktion 7 wird in einer Zerkleinerungsvorrichtung 8, z. B. wiederum in der eigentlichen Schreddervorrichtung, weiter zerkleinert und wieder dem Ausgangsmaterial (Resh 1) zugeführt.

Aus der Feinfraktion 5 wird zunächst mittels eines Siebs 9 eine Feinstfraktion 10 mit Korngrössen von 0-3 mm ausgeschieden. Diese Feinstfraktion 10 umfasst insbesondere Schwermetallstäube (Zink, Zinn etc.) sowie Eisenmetallstäube, welche während des Schredderprozesses entstanden sind. Mittels eines Bandmagneten 11 werden die Eisenmetallstäube von den Schwermetallstäuben getrennt. Die verbleibenden Schwermetallstäube 12 werden zur Entsorgung in einem Sammelbehälter zwischengelagert.

Aus der verbleibenden Feinfraktion 5 und der Mittelfraktion 6 wird mittels eines Bandmagneten 13 bzw. 14 Eisenmetall 15 abgeschieden und zusammen mit dem Eisenmetall aus der Feinstfraktion 10 in einem Sammelbehälter für die Wiederverwertung zwischengelagert. Die Mittelfraktion 6 wird nun in einen NE-Scheider 16 gefördert, wo Nichteisenmetalle 17 (insbesondere Aluminium) zur Zwischenlagerung in einem Sammelbehälter abgeschieden werden. Als Nächstes gelangt die vorgereinigte Mittelfraktion 6 in einen Extruder 18. Dort wird sie thermo-mechanisch aufgeschlossen, d. h. die verschiedenen Materialien in der vorgereinigten Mittelfraktion werden durch Druck und Reibung aneinander aufgerieben, so dass am Material, besonders an Faserstoffen, anhaftende Metallteile und Stäube gelöst und freigelegt werden. Im Extruder 18 erfährt das Material auch eine gewisse weitere Zerkleinerung, und zwar in einer Weise, dass eine Homogenisierung hinsichtlich der Korngrösse erfolgt: Das Korngrössen-Spektrum der transformierten Mittelfraktion beträgt noch 10-40 mm.

Auch die nach Durchgang des Bandmagneten 13 verbliebene Feinfraktion 5 wird durch einen geeigneten Extruder 19 geführt. Dort wird auch sie thermo-mechanisch aufgeschlossen, um anhaftende Metallteile und Stäube zu lösen und freizulegen. Auch die Feinfraktion 5 wird hinsichtliche ihres Korngrössenspektrums homogenisiert.

Die aufgeschlossene Mittelfraktion 6 gelangt vom Extruder 18 zu einem Trennsystem 20, wo sie nach dem spezifischen Gewicht ihrer Anteile in eine Staubfraktion 21, eine Leichtfraktion 22 und eine Schwerfraktion 23 klassiert wird. Auf ähnliche Weise wird die aufgeschlossene Feinfraktion 5 weiter verarbeitet: Sie gelangt zunächst zu einem Trennsystem 24, wo sie - wie die Mittelfraktion - in drei Fraktionen aufgeteilt wird. Bei den Trennsystemen 20, 24 zur Aufteilung in die drei Fraktionen handelt es sich um an sich bekannte Trenntische bzw. Kombinationen mehrerer Trenntische, deren Konfiguration und Betriebsparameter den zu trennenden Fraktionen angepasst sind. Die Trenntische können ein- oder mehrstufig ausgebildet sein.

Die Staubfraktion wird direkt mit der Staubfraktion 21 der Mittelfraktion 6 zusammengeführt, ähnlicherweise auch die Leichtfraktion mit der Leichtfraktion 22 der Mittelfraktion 6.

Die Schwerfraktion 23 der Mittelfraktion 6 und die Schwerfraktion 25 der Feinfraktion 5 gelangen getrennt voneinander zu Magnettrommeln 26, 27, wo Eisenmetall 28 abgeschieden wird. Das restliche Material der Schwerfraktion 25 der Feinfraktion 5 wird in einen NE-Scheider 29 geführt. Auch das restliche Material der Schwerfraktion 23 der Mittelfraktion 6 passiert einen gesonderten NE-Scheider 30. In den beiden NE-Scheidern 29, 30 werden Nichteisenmetalle 31 abgetrennt, verbliebenes Eisenmetall, welches mit dem im vorhergehenden Schritt abgetrennten Eisenmetall 28 zusammengeführt wird, sowie inerte Materialien und Kunststoff 32.

Auch die Leichtfraktion 22 durchläuft einen NE-Scheider 33, wo Nichteisenmetalle abgetrennt und mit den Nichteisenmetallen 31 aus den Schwerfraktionen zusammengeführt werden. Die abgeschiedenen Nichteisenmetalle 31 sowie die inerten Materialien und Kunststoffe 32 können für die weitere Verwertung in an sich bekannter Weise feiner klassiert und gereinigt werden, aus den Nichteisenmetallen 31 werden beispielsweise mittels eines Starkfeldmagnetabscheiders Kupfer- und Aluminiumanteile abgetrennt, die restlichen Materialien werden in inerte Materialien (wie Glas oder Sand) und in Kunststoffe separiert.

Beim restlichen Material aus der Leichtfraktion 22 - wie auch beim Material in der Staubfraktion 21 - handelt es sich um ein faseriges Restmaterial 34, welches sich für eine Weiterverarbeitung zu Ersatzbrennstoffen eignet.

Im Rahmen dieser Weiterverarbeitung wird das faserige Restmaterial 34 zunächst in einem Mischer 35 mit einem Stabilisator 36 gemischt sowie anschliessend mit Zuschlagstoffen zur Optimierung des Heizwerts und zur Verbesserung des Verbrennungsverhaltens angereichert. Beim Stabilisator 36 handelt es sich um ein Material folgender Zusammensetzung:
50 Gew. % Chloropyromorphite;
10 Gew. % Hinsdalite;
25 Gew. % Plumbogummite; und
15 Gew. % Corkite.

Dieses wird dem faserigen Restmaterial 34 zugegeben, wobei der Anteil des Stabilisators 36 ca. 6 Gew. % des Restmaterials 34 beträgt. Der Stabilisator 36 führt dazu, dass die in der Form von Feinstpartikeln in den Fasern verbliebenen Schwermetall-Spurenelemente immobilisiert und wasserunlöslich abgebunden werden.

Die Zuschlagstoffe umfassen zerkleinerte und von Eisenmetallen befreite PE-Folien 37, subsidiär und abhängig vom gewünschten Heizwert PE-Granulat 38 sowie Zuschlagstoffe auf Kalkbasis (Calciumadditive) 39 und nachwachsende Rohstoffe 40 wie Holz, Stroh, Rinde und andere Biomasse. Im Mischer 35 werden sämtliche zugegebenen Stoffe 36, 37, 38, 39, 40 mit dem Restmaterial 34 innig vermischt, so dass einerseits der Stabilisator 36 möglichst alle Anteile des Restmaterials 34 kontaktiert und dass für die weitere Verarbeitung ein homogenes Material gebildet wird.

Eine typische Rezeptur für einen Ersatzbrennstoff umfasst (auf der Stufe des Mischers 35) folgende Anteile:

| Stoff | Anteil (Gew.%) |
|---|---|
| faseriges Restmaterial | 40.5 |
| Stabilisator | 2.5 |
| PE-Folie | 29 |
| PE-Granulat | 19 |
| Ca-Additive | 9 |

Als Nächstes gelangt das stabilisierte und angereicherte Material in einen Extruder 41. Dort erfolgt eine thermo-mechanische Transformation des Brennstoff-Ausgangsmaterials, wobei die Bestandteile weiter gemischt, komprimiert und homogenisiert werden. Als Produkt wird ein Feststoff gebildet mit einer durch die Auswahl der Extruderköpfe in weiten Grenzen wählbaren Form und Grösse. Das Produkt wird am Extruderausgang abgelängt und in der Folge in einem Kühler 42, einem Bandkühlsystem mit Ventilation, abgekühlt. Je nach gewünschter Grösse der Kompaktate kann das Produkt in einer Zerkleinerungsvorrichtung 43 auf eine gewünschte Grösse weiter zerkleinert werden. Durch Wahl des Extruderkopfs und des durchgeführten Zerkleinerungsschritts lassen sich mit der Anlage für verschiedene Verwendungszwecke geeignete Brennstoffe 44 in der Form von Granulaten, Chips, Pellets, Briketts oder grösservolumigen Kompaktaten erzeugen.

Das Blockdiagramm und die vorstehende Beschreibung betreffen die Bearbeitungsschritte des Verfahrens und eine Anlage zur Durchführung des Verfahrens. In der verfahrenstechnischen Realisierung sind weitere Schritte (Materialtransport, Zwischenlagerung, Beschickung etc.) vorzusehen und entsprechend weitere Vorrichtungen (Fördervorrichtungen wie Elevatoren, Förderbänder etc. sowie Zwischenbunker, Beschickungsstationen etc.) Bei einzelnen Verfahrensschritten, z. B. bei der primären Aufteilung des Resh in drei Fraktionen im Sternfingersieb 4, bei den Trennsystemen 20, 24 zur Klassierung der Feinfraktion 5 und der aufgeschlossenen Mittelfraktion 6 oder beim Mischer 35, sind Entstaubungssysteme vorzusehen. Solche Systeme sind aus dem Stand der Technik an sich bekannt.

Mit der beschriebenen Anlage lassen sich letztlich bei einer typischen Zusammensetzung des Resh ca. 70 Gew.% des Ausgangsmaterials zu einem Ersatzbrennstoff verarbeiten, wobei dieser Ersatzbrennstoff unter Anderem gemäss der 17. Verordnung zum deutschen Bundesimmissionsschutzgesetz (17. BimSch) als thermisch nutzbares Material klassiert ist. Die restlichen 30 Gew.% des Ausgangsmaterials fallen zu einem Grossteil als Wertstoffe an, so ca. 16 Gew.% Eisenmetalle, 2.5 Gew.% separiertes Aluminium sowie 9.5 Gew.% Nichteisenmetalle, inertes Material und Kunststoff (insbesondere hochdichtes Polyethylen - HDPE). Es ergibt sich somit eine Verwertungsquote von nahezu 100 %.

Wie weiter oben erwähnt, kann die Zusammensetzung des Ersatzbrennstoffs dem Verwendungszweck angepasst werden. Die Menge des zugegebenen Stabilisators richtet sich zudem nach der Zusammensetzung und Konsistenz des faserigen Restmaterials. Diese Eigenschaften sind insbesondere abhängig vom Ausgangsmaterial, den durchgeführten Trennschritten sowie den Umweltbedingungen, z. B. der Temperatur und der Feuchtigkeit.

Das beschriebene bevorzugte Verfahren und die entsprechende Anlage können in vielerlei Hinsicht abgewandelt, erweitert oder - wenn das Ausgangsmaterial bestimmte Bedingungen erfüllt oder bei den Produkten geringere Anforderungen gestellt werden - auch vereinfacht werden. So kann insbesondere die Reihenfolge der durchgeführten Trennschritte verändert werden, oder es können zusätzliche Trennschritte vorgesehen werden.

Zusammenfassend ist festzustellen, dass durch die Erfindung ein Verfahren zur Verwertung von Schreddermüll und eine zur Durchführung des Verfahrens geeignete Anlage geschaffen werden, welche die effiziente Verwertung eines grossen Teils der Schredder-Leichtfraktion zu einem vielseitig einsetzbaren Ersatzbrennstoff erlauben.

## Patentansprüche

1. Verfahren zur Verwertung von Schreddermüll, insbesondere einer Schredder-Leichtfraktion aus der Automobilzerkleinerung, **gekennzeichnet durch** folgende Schritte:
- Gewinnung einer Feinfraktion (5) und einer Mittelfraktion (6) aus dem Schreddermüll (1);
- Abscheiden von Eisenmetallen (15) und Nichteisenmetallen (17) aus der Mittelfraktion (6) zur Gewinnung einer vorgereinigten Mittelfraktion;
- Thermo-mechanisches Aufschliessen der vorgereinigten Mittelfraktion und bevorzugt auch der Feinfraktion (5), insbesondere mittels eines Extruders (18, 19);
- Abscheiden von Eisenmetallen (28) und Nichteisenmetallen (31), inerten Materialien sowie Kunststoffen (32) aus der aufgeschlossenen Mittelfraktion und der Feinfraktion (5) zur Gewinnung eines faserigen Restmaterials (34), welches ohne weitere Trennschritte zu einem Ersatzbrennstoff (44) verarbeitbar ist.

2. Verfahren nach Anspruch 1, **gekennzeichnet durch** folgenden weiteren Schritt:
- Weiterverarbeitung des faserigen Restmaterials (34) zu einem Ersatzbrennstoff (44).

3. Verfahren nach Anspruch 1 oder 2, **dadurch gekennzeichnet, dass** der Schreddermüll (1) vor der Gewinnung der Feinfraktion (5) und der Mittelfraktion (6) von lose aufliegendem Eisenmetall (3) befreit wird.

4. Verfahren nach einem der Ansprüche 1 bis 3, **dadurch gekennzeichnet, dass** zur Gewinnung der Feinfraktion (5) und der Mittelfraktion (6) folgende Schritte ausgeführt werden:
- Trennung des Schreddermülls (1) in eine Grobfraktion (7), die Mittelfraktion (6) und die Feinfraktion (5);
- Rückführen der Grobfraktion (7) in eine Zerkleinerungsvorrichtung (8), insbesondere in eine Schredderanlage.

5. Verfahren nach Anspruch 4, **dadurch gekennzeichnet, dass** eine Korngrösse der Feinfraktion (5) kleiner ist als ca. 15 mm und dass eine Korngrösse der Grobfraktion (7) grösser ist als ca. 60 mm.

6. Verfahren nach einem der Ansprüche 1 bis 5, **dadurch gekennzeichnet, dass** aus der Feinfraktion eine Feinstfraktion ausgeschieden wird.

7. Verfahren nach einem der Ansprüche 1 bis 6, **dadurch gekennzeichnet, dass** das Abscheiden von Eisenmetallen (28) und Nichteisenmetallen (31), inerten Materialien sowie Kunststoffen (32) separat für die aufgeschlossene Mittelfraktion und die Feinfraktion (5) durchgeführt wird und dass anschliessend verbleibende Anteile der Fraktionen zur Gewinnung des faserigen Restmaterials (34) zusammengeführt werden.

8. Verfahren nach Anspruch 7, **gekennzeichnet durch** folgende Schritte:
- Klassieren der aufgeschlossenen Mittelfraktion in eine erste Staubfraktion, eine erste Leichtfraktion und eine erste Schwerfraktion (23);
- Auftrennung der ersten Schwerfraktion (23) in Eisenmetalle (28), Nichteisenmetalle (31) und Inert- und Kunststoffmaterialien (32);
- Klassieren der Feinfraktion (5) in eine zweite Staubfraktion, eine zweite Leichtfraktion und eine zweite Schwerfraktion (25);
- Auftrennung der zweiten Schwerfraktion (25) in Eisenmetalle (28), Nichteisenmetalle (31) und Inert- und Kunststoffmaterialien (32);
- Zusammenführen der ersten Leichtfraktion und der zweiten Leichtfraktion;
- Abtrennen von Nichteisen-Metallen aus den zusammengeführten Leichtfraktionen (22);
- Zusammenführen der ersten und der zweiten Staubfraktion (21) mit den Leichtfraktionen (22) zur Gewinnung des faserigen Restmaterials (34).

9. Verfahren nach einem der Ansprüche 1 bis 8, **dadurch gekennzeichnet, dass** bei der Weiterverarbeitung des faserigen Restmaterials (34) zu dem Ersatzbrennstoff (44) dem faserigen Restmaterial (34) ein mineralischer Stabilisator (36) zum Binden von Schwermetallen zugegeben wird.

10. Verfahren nach Anspruch 9, **dadurch gekennzeichnet, dass** ein Gewichtsverhältnis des zugegebenen mineralischen Stabilisators (36) zum faserigen Restmaterial (34) zwischen 1:10 und 1:100, bevorzugt zwischen 1:15 und 1:50, liegt.

11. Verfahren nach Anspruch 9 oder 10, **dadurch gekennzeichnet, dass** der mineralische Stabilisator (36) mindestens ein Pyromorphit umfasst, insbesondere Fluoropyromorphit, Hydroxypyromorphit und/oder Chloropyromorphit.

12. Verfahren nach Anspruch 11, **dadurch gekennzeichnet, dass** der mineralische Stabilisator (36) weiter mindestens einen der folgenden Stoffe umfasst: Hinsdalit, Plumbogummit, Corkit.

13. Verfahren nach einem der Ansprüche 1 bis 12, **dadurch gekennzeichnet, dass** bei der Weiterverarbeitung des faserigen Restmaterials (34) zu dem Ersatzbrennstoff (44) dem faserigen Restmaterial Zuschlagstoffe (37, 38, 39, 40) zur Optimierung des Heizwerts zugegeben werden.

14. Verfahren nach Anspruch 13, **dadurch gekennzeichnet, dass** die Zuschlagstoffe (37, 38, 39, 40) mindestens einen der folgenden Stoffe umfassen: Polyethylen-Folienmaterial, Polyethylen-Granulat, Calciumadditive, nachwachsende Rohstoffe.

15. Verfahren nach einem der Ansprüche 1 bis 14, **dadurch gekennzeichnet, dass** bei der Weiterverarbeitung des faserigen Restmaterials (34) zu dem Ersatzbrennstoff (44) das faserige Restmaterial (34) einer thermo-mechanischen Transformation, insbesondere in einem Extruder (41), unterworfen wird.

16. Anlage zur Durchführung des Verfahrens zur Verwertung von Schreddermüll gemäss einem der Ansprüche 1 bis 15, **gekennzeichnet durch**:
- eine Siebvorrichtung (4), insbesondere ein Sternfingersieb, zur Gewinnung einer Feinfraktion (5) und einer Mittelfraktion (6) aus dem Schreddermüll (1);
- eine Magnetvorrichtung (14), insbesondere einen Bandmagneten, und einen NE-Scheider (16) zum Abscheiden von Eisenmetallen (15) und Nichteisenmetallen (17) aus der Mittelfraktion (6) zur Gewinnung einer vorgereinigten Mittelfraktion;
- ein Extrudersystem (18, 19) zum thermo-mechanischen Aufschliessen der vorgereinigten Mittelfraktion und bevorzugt auch der Feinfraktion (5), derart dass Metallteile und Stäube freigelegt werden;
- Trennsysteme (20, 24), insbesondere Trenntische, Magnetvorrichtungen (26, 27) und NE-Scheider (29, 30, 33), zum Abscheiden von Eisenmetallen (28) und Nichteisenmetallen (31), inerten Materialien und Kunststoffen (32) aus der aufgeschlossenen Mittelfraktion und der Feinfraktion (5) zur Gewinnung eines faserigen Restmaterials (34), welches ohne weitere Trennschritte zu einem Ersatzbrennstoff (44) verarbeitbar ist.

17. Anlage nach Anspruch 16, **gekennzeichnet durch**
- mehrere Trennsysteme (20, 24) zum Klassieren der aufgeschlossenen Mittelfraktion und der Feinfraktion (5) in jeweils eine Staubfraktion (21), eine Leichtfraktion (22) und eine Schwerfraktion (23, 25);
- Magnettrommeln (26, 27) zum Abscheiden von Eisenmetallen (28) aus den Schwerfraktionen (23. 25);
- NE-Scheider (29, 30) zum Abscheiden von Nichteisenmetallen (31) aus den Schwerfraktionen;
- einen NE-Scheider (33) zum Abscheiden von Nichteisenmetallen (31) aus den Leichtfraktionen (22).

18. Anlage nach Anspruch 16 oder 17, **gekennzeichnet durch**
- einen Mischer (35) zum Mischen des faserigen Restmaterials (34) mit einem mineralischen Stabilisator (36) und/oder mit Zuschlagstoffen (37, 38, 39, 40) zur Optimierung des Heizwerts.

19. Anlage nach einem der Ansprüche 16 bis 18, **gekennzeichnet durch**
- einen weiteren Extruder (41) zum thermo-mechanischen Transformieren des faserigen Restmaterials (34) zu einem Ersatzbrennstoff (44).

20. Anlage nach Anspruch 19, **gekennzeichnet durch**
- eine Kühlvorrichtung (42) zum Abkühlen des transformierten faserigen Restmaterials;
- eine Zerkleinerungsvorrichtung (43) zum wahlweisen Zerkleinern des abgekühlten faserigen Restmaterials zu einem Granulat oder Pulver.

21. Brennstoff, welcher aus Schreddermüll, insbesondere einer Schredder-Leichtfraktion aus der Automobilzerkleinerung, durch folgende Schritte hergestellt ist:
- Gewinnung einer Feinfraktion (5) und einer Mittelfraktion (6) aus dem Schreddermüll (1);
- Abscheiden von Eisenmetallen (15) und Nichteisenmetallen (17) aus der Mittelfraktion (6) zur Gewinnung einer vorgereinigten Mittelfraktion;
- Thermo-mechanisches Aufschliessen der vorgereinigten Mittelfraktion und bevorzugt auch der Feinfraktion (5), insbesondere mittels eines Extruders (18, 19);
- Abscheiden von Eisenmetallen (28) und Nichteisenmetallen (31), inerten Materialien sowie Kunststoffen (32) aus der aufgeschlossenen Mittelfraktion und der Feinfraktion (5) zur Gewinnung eines faserigen Restmaterials (34).
- Weiterverarbeitung des faserigen Restmaterials (34) zum Brennstoff (44), ohne dass weitere Trennschritte ausgeführt werden.

22. Brennstoff nach Anspruch 21, **dadurch gekennzeichnet, dass** bei der Weiterverarbeitung des faserigen Restmaterials (34) zum Brennstoff (44) dem faserigen Restmaterial (34) ein mineralischer Stabilisator (36) zum Binden von Schwermetallen zugegeben wird.

23. Brennstoff nach Anspruch 21 oder 22, **dadurch gekennzeichnet, dass** bei der Weiterverarbeitung des faserigen Restmaterials (34) zum Brennstoff (44) dem faserigen Restmaterial (34) Zuschlagstoffe (37, 38, 39, 40) zur Optimierung des Heizwerts zugegeben werden.

24. Brennstoff nach Anspruch 23, **dadurch gekennzeichnet, dass** die Zuschlagstoffe (37, 38, 39, 40) mindestens einen der folgenden Stoffe umfassen: Polyethylen-Folienmaterial, Polyethylen-Granulat, Calciumadditive, nachwachsende Rohstoffe.

25. Brennstoff nach einem der Ansprüche 21 bis 24, **dadurch gekennzeichnet, dass** bei der Weiterverarbeitung des faserigen Restmaterials (34) zum Brennstoff (44) das faserige Restmaterial (34) einer thermo-mechanischen Transformation, insbesondere in einem Extruder (41), unterworfen wird.
